# EUROPEAN PATENT APPLICATION

(11) **EP 1 977 849 A1**
(43) Date of publication of application: **08.10.2008**
(21) Application number: 07007083.4
(22) Date of filing: 04.04.2007
(51) Int. Cl.: B23K 20/12, B60G 7/00, F16F 1/38

(54) **Method of manufacturing a link rod by friction stir welding with forming slits at given intervalls on projection of the bracket material**

(71) Applicant: YAMASHITA RUBBER KABUSHIKI KAISHA, Fujimino City Saitama 356-8556 (JP)
(72) Inventor: Ide, Takanobu, Fujimino-shi Saitama (JP); Shimada, Yasuhiro, Fujimino-shi Saitama (JP)
(74) Representative: Prechtel, Jörg

(57) **Abstract**

The present application describes a method of manufacturing link rod which integrally joins bushes to each end of pipe-shaped arm portion (2), wherein an extrusion molded bracket material (14) is formed to have the length allowing N pieces of the arm portions (2) to be arranged in a horizontal row. Engaging projections (7) provided on the bracket material (14) are engaged with ends (2a,2b) of the arm portions (2). Then, the ends (2a,2b) of the arm portions (2) are butted against mounting walls provided on a mounting projection (15) of the bracket material (14). N pieces of the arm portions (2) are arranged without clearance in a horizontal row with respect to the bracket material (14) to form butted portions in the shape of a continuous straight line. The friction stir welding is carried out along the butted portions. Then, the bracket material (14) is cut into the width of the bracket. The engaging projections (7) are formed by forming slits (18) at given intervals on a horizontal projection (17) extrusion molded integrally with the bracket material (14).

## Description

### BACKGROUND OF THE INVENTION

### 1. Field of the Invention

The present invention relates to a method of manufacturing various kinds of link rods being in use for a vehicle suspension or the like.

### 2. Description of the Related Art

There is publicly known a link rod which has a pipe-shaped arm portion and a bush mounting bracket being friction stir welded to an end of the arm portion. There is also publicly known the art wherein a small diameter portion is provided on a mounting projection integrally formed with a bracket, this small diameter portion is engaged with an end of the arm portion and the end of the arm portion comes into butt contact with the mounting projection so as to be friction stir welded along the butt contact portion. Further, there is publicly known the art wherein a material for the bracket is provided for making a plurality of brackets to be cut to a predetermined width in the longitudinal direction, an end of the arm portion is engaged with height difference with the bracket material to be sub-assembled, this sub-assembled arm portion is arranged in such a manner that a plurality of the arm portions are arranged in a horizontal row along the longitudinal direction of the bracket material, height difference portions of the regions engaged as above are arranged in the shape of a straight line across all of the arm portions so that friction stir welding is carried out at a time along the height difference portions, and thereafter each of link rods is formed by cutting the bracket material in a predetermined size of a product in the transverse direction of the bracket material.

Patent reference 1: Japanese patent laid-open publication No. H11-101286

Patent reference 2: Japanese patent laid-open publication No. H11-190375

Patent reference 3: Japanese patent laid-open publication No. H11-099415.

When friction stir welding the bracket to the arm portion, tool traveling surfaces in joining regions between both members must be formed in a plane without height difference. Further, in the case where the arm portion is formed of pipe member and from the outside thereof the friction stir welding is carried out, it is required to keep flush without denting the pipe member due to pressing by the tool. Although these points can be solved by having the mounting projection of the bracket engaged with the arm portion so as to form a flush butt portion like the above-described prior art, it is required to make the small diameter portion each for one or two brackets with respect to one arm portion and to have it engaged with the arm portion, whereby production efficiency can not be improved. Also in the above mentioned method of arranging the arm members for a plurality of link rods in a horizontal row to join them at a time in a lot, it requires a great deal of time.

### SUMMARY OF THE INVENTION

Therefore, the present invention aims to provide the link rod manufacturing method capable of reliable friction stir welding and at the same time of improving the production efficiency.

To solve the above-described disadvantages, in accordance with a first aspect of the present invention, a method of manufacturing a link rod which comprises an arm portion having a pair of spaced first and second walls parallel extending to each other and a third wall connecting between the first and second walls, and a bush mounting bracket being joined to an end in the longitudinal direction of the arm portion, wherein a bracket material is extrusion molded and cut in the longitudinal direction thereof to the length capable of forming a plurality of bush mounting brackets, a plurality of arm portions are arranged in a horizontal row with respect to the bracket material in the direction of extrusion of the bracket material, each end of the arm portions are butted against the bracket material such that such butted portions extend in the form of continuous straight line, each of the arm portions are friction stir welded to the bracket material along the butted portions in one process step, and then the bracket material is cut to the width of a bracket, comprises the steps of forming integrally on the bracket material a horizontal projection which projects in the direction crossing at a right angle the extrusion direction of the bracket material and extends continuously in the extrusion direction thereof, making vertical slits, each of which has the width allowing end of the third wall to be engaged, on the horizontal projection at predetermined intervals in the extrusion direction of the bracket material to form a plurality of separate engaging projections, having the ends of the third walls engaged with each of the slits and, at the same time, having the engaging projections fitted into spaces provided between the first wall and the second wall on the side of the ends of the arm portions, having each end of the first and second walls butted against the bracket material to be made flush with each other to form a continuous plane tool traveling surface across the arm portions arranged in a horizontal row.

In accordance with a second aspect of the present invention, the arm portion is formed in the shape of a square pipe, a hollow portion opened to an end of the square pipe forms the space provided between the first and second walls, and the engaging projection is engaged with the hollow portion.

In accordance with a third aspect of the present invention, the first and second walls are provided each with protrusions protruding from the third wall in a horizontal direction crossing at right angle the longitudinal direction of the arm portion, and the space into which the engaging projection is fitted is formed between the protrusions of the neighboring arm portions.
In accordance with a fourth aspect of the present invention, a method of manufacturing a link rod which comprises a longitudinally extending arm portion having a pair of spaced first and second walls formed in parallel in a cross section crossing at right angles the longitudinal direction thereof and a third wall connecting between the first and second walls, and a bush mounting bracket having a bush mounting hole and being integrally formed with an engaging projection to be engaged between the first and second walls on an longitudinal end of the arm portion, wherein the bush mounting bracket is friction stir welded to and formed integral with the longitudinal end of the arm portion, comprises the steps of forming a bracket material by extrusion molding such that an extrusion has in cross section a configuration of a front view of the bush mounting bracket when viewed from an axial direction of the bush mounting hole and is formed integral with a horizontal projection which projects in the direction crossing at a right angle the direction of extrusion and which extends continuously in the direction of extrusion and then by cutting the extrusion in the longitudinal direction thereof to such a predetermined length that a plurality of the bush mounting brackets are arranged in a horizontal row, forming an arm material by extrusion molding such that a cross section of an extrusion corresponds to a cross section, crossing at a right angle the longitudinal direction of each of the arm portions, in such a state that a plurality of the arm portions are arranged in a horizontal row, and such that the width of the extrusion corresponds to the cutting length of the bracket material and then by cutting the extrusion in the longitudinal direction thereof to a predetermined length of the arm portion, making vertical slits, each of which has the width allowing an end of the third wall to be engaged, on the horizontal projection at predetermined intervals in the extrusion direction of the bracket material to form a plurality of separate engaging projections, arranging the bracket material and the arm material in such a state that the extrusion directions of these materials cross at right angle each other so as to have the ends of the third walls fitted into the slits and at the same time to have the engaging projections fitted into spaces provided between the first wall and the second wall on the side of the ends of the arm portions, having each end of the first and second walls butted against the bracket material to be made flush with each other to form a continuous plane tool traveling surface across the arm portions arranged in a horizontal row and to form butted portions in the shape of continuous straight line, carrying out friction stir welding by letting a rotation tool travel on the tool traveling surface along the butted portions so as to integrate the bracket material with the arm material, and then cutting the bracket material and the arm material into the width of a product.

According to the first aspect of the present invention, since when forming the bracket material, the horizontal projection is formed integral therewith and thereafter the vertical slits are made on this horizontal projection so as to form the individually separate engaging projections, the arm portions are sub-assembled one by one with each of the engaging projections by fitting each of the engaging projections into the hollow portion provided on the end of the arm portion, and the ends of the arm portions are butted against the bracket material, so that a plurality of the arm portions can be sub-assembled with the single bracket material with high positioning accuracy. Also, since all of the arm portions are sub-assembled integrally with the bracket material, the following treatment may be facilitated.

Moreover, merely by making the vertical slits, each of which has the width allowing the end of the third wall to be engaged, on the horizontal projection at the predetermined intervals in the extrusion direction of the bracket material, two or more engaging projections can be separated individually. Further, when the ends of the third walls are engaged with each of the slits and when the engaging projections are fitted into the spaces provided between the first wall and the second wall on the side of the ends of the arm portions, it is possible to be sub-assembled. When each end of the first and second walls is butted against the bracket material to be made flush with each other, a continuous plane tool traveling surface can be formed.

When the sub-assembled arm portions are arranged in a horizontal row, each tool traveling surface is formed in the continuous plane shape with respect to each of the arm portions, whereby the friction stir welding can be carried out on this continuous tool traveling surface along the butted portions. Then, since the engaging projections are fitted into the hollow portions on the ends of the arm portions, at the time of being friction stir welded, the engaging projections support the ends of the arm portions from the inside thereof to prevent deformation when the arm portions are pressed by the tool, so that the friction stir welding may be performed with high reliability.

Further, the sub-assembling operation with high efficiency by assembling each of the arm portions and the bracket material with engaging projections, the joining in one continuous process step between all of the arm portions and the bracket material by the friction stir welding, then the facilitated separation of each link rod by regular-size cutting the bracket material at relatively short cutting length, etc. combine to realize the manufacture with high production efficiency.

According to the second aspect of the present invention, since the arm portion is formed in the shape of square pipe, the hollow portion opened to the end of the arm portion forms the space between the first and second walls to allow the engaging projection to be fitted.

According to the third aspect of the present invention, since the first wall and the second wall of the arm portion each are provided with the protrusions which extend from the third wall to the direction crossing at right angles the longitudinal direction of the arm portion, the spaces can be formed between the protrusions of the neighboring arm portions so as to allow each of the engaging projections to be fitted into the spaces.

According to the fourth aspect of the present invention, the bracket material and the arm material each of which is extrusion molded in a predetermined size for making a plurality of link rods are arranged in such a state that the extrusion directions of these materials cross at right angle each other. The engaging projections formed integral with the bracket material are fitted into between the first wall and the second wall of the arm portions. Each end of the first and second walls is butted against the bracket material. The butted portions are made flush and have the shape of continuous straight line so as to allow the tool traveling surface of flush continuous plane to be formed. Then, when friction stir welding the arm material to the bracket material along the butted portions and cutting such joined bracket material and arm material into the width of a product, it is possible to manufacture the link rod easily and efficiently. At this time, since the manufacture can be carried out using only two kinds of members such as the bracket material and the arm material, the treatment and positioning may be facilitated. Moreover, it is possible to easily form the tool traveling surface of continuous flush plane along the butted portions, while the friction stir welding may be easily performed.

Further, since the engaging projections are formed by making the vertical slits on the horizontal projection formed integral with the bracket material, the ends of the third walls are fitted into the slits at the time of butting the arm material against the bracket material, it is possible to butt the arm materials with a plurality of the third walls against the bracket material.

### BRIEF DESCRIPTION OF THE DRAWINGS

FIGs. 1-A and B are views showing a link rod for a suspension to be obtained by the present invention;
FIGs. 2-A and B are views for explanation of a bracket material according to a first embodiment of the present invention:
FIG. 3 is a view showing an assembling operation at the time of sub-assembling;
FIG. 4 is a top plan view showing an arrangement of arm portions in a horizontal row in a sub-assembled state;
FIG. 5 is a view showing ends of the arm portions in the sub-assembled state;
FIG. 6 is a view showing a state of friction stir welding;
FIG. 7 is a plan view showing a friction stir welding process and a cutting process;
FIG. 8-A is a view showing an assembling operation according to a second embodiment and B is a cross sectional view of an arm portion;
FIGs. 9-A and B are cross sectional views schematically showing another arm portions;
FIGs. 10-A, B and C are views schematically showing an entire process according to a third embodiment;
FIG. 11 is a view showing a sub-assembling method according to the third embodiment;
FIG. 12 is a view showing a state of friction stir welding according to the third embodiment; and
FIG. 13 is a view showing an end surface structure of an arm material according to the third embodiment.

### DETAILED DESCRIPTION OF THE PREFERRED EMBODIMENTS

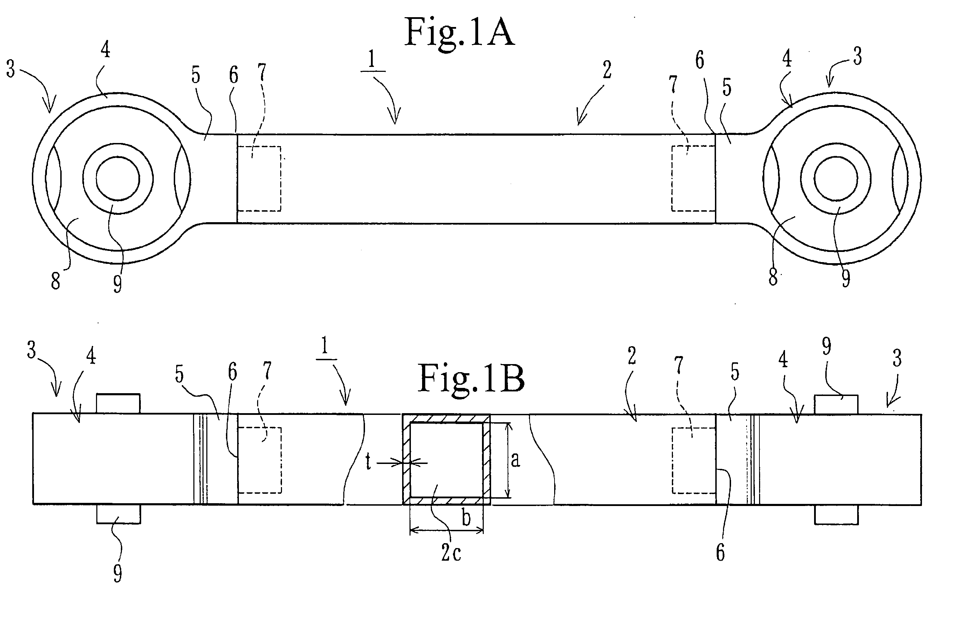

Hereinafter, the first embodiment of the present invention will be explained with reference to the accompanying drawings. FIGs. 1-A and B show a link rod to be obtained by the present invention, wherein a view A is a front view and a view B is a plan view.

This link rod 1 has an arm portion 2 of square pipe configuration and a pair of bush 3 which are joined to and integrated with each end in the longitudinal direction of the arm portion 2. An upper wall and a lower wall of the square pipe shaped arm portion correspond to a first wall and a second wall of the present invention and a right wall and a left wall correspond to a third wall or third walls. The left and right bushes 3 are formed identical. It is possible to freely vary the size, the material, etc. with respect to the right and the left bushes 3.
Each of the bushes 3 comprises a bracket 4 of ring shape and a mounting projection 5 integrally projecting to the radially outward direction from a portion of an external periphery of the bracket 4. An end of the mounting projection 5 and an end of the arm portion 2 are butted each other to form a butt portion 6 and joined integral with each other by friction stir welding. An engaging projection 7 projecting further from the mounting projection 5 is press fitted into the end of the arm portion 2 in the vicinity of the butt portion 6. Inside of the bracket 4 an inner tube 9 is arranged substantially concentrically through the intermediary of a rubber vibration isolator 8. Herein, the structure of the bush 3 is optional. For example, the bush may be formed in a double tube type of inner and outer tubes capable of being press fitted into a ring portion of the bracket 4.

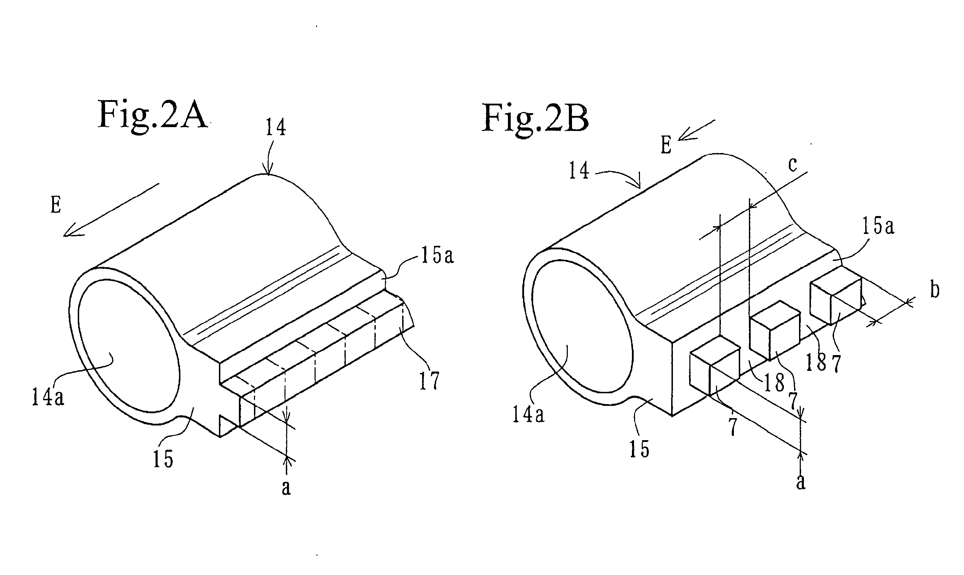

FIG. 2-A shows a bracket material 14 for making the bracket 4. The bracket material 14 is made by extrusion molding light metal such as aluminum alloy, etc. or resin in the direction of an arrow E. The bracket material 14 is cut into the proper length to make a plurality of brackets.

A cross section of the extrusion of the bracket material 14 is the same as a configuration of the front view ( FIG. 1-A) of the bracket 4 and is integrally provided with a ring-shaped portion and a mounting projection 15 which extends radially outwardly from a portion of the ring-shaped portion. The extruding direction E is in coincidence with the direction of an imaginary center line of a bush mounting hole 14a formed in the bracket material 14. This mounting projection 15 is integrally formed with the bracket material 14 and extends continuously along the entire length of the bracket material 14 in the extruding direction E. Further, on the mounting projection 15 there is integrally formed in the projecting direction thereof a horizontal projection 17 which projects with height difference in the upward and downward direction with respect the mounting projection 15. The horizontal projection 17 is formed integral with the mounting projection 15 in the shape of projection extending continuously in the direction of extrusion.

In FIG. 2-B, slits 18 are made in the predetermined intervals in the longitudinal direction of the horizontal projection 17 in such positions as marked with phantom lines in FIG. 2-A. Each of engaging projections 7 is formed on the horizontal projection 17 in an individually separate arrangement between the slits 18. The width (c) of each slit 18 is set to be substantially twice as large as the thickness (t) (see FIG. 1-B) of a vertical wall of the arm portion 2. The width (a) in the vertical direction and the width (b) in the horizontal direction of each of the engaging projection are substantially identical with the width (a) in the vertical direction and the width (b) in the horizontal direction of the hollow portion 2c of the arm portion 2 (see FIG. 1-B and FIG. 2-B), respectively.

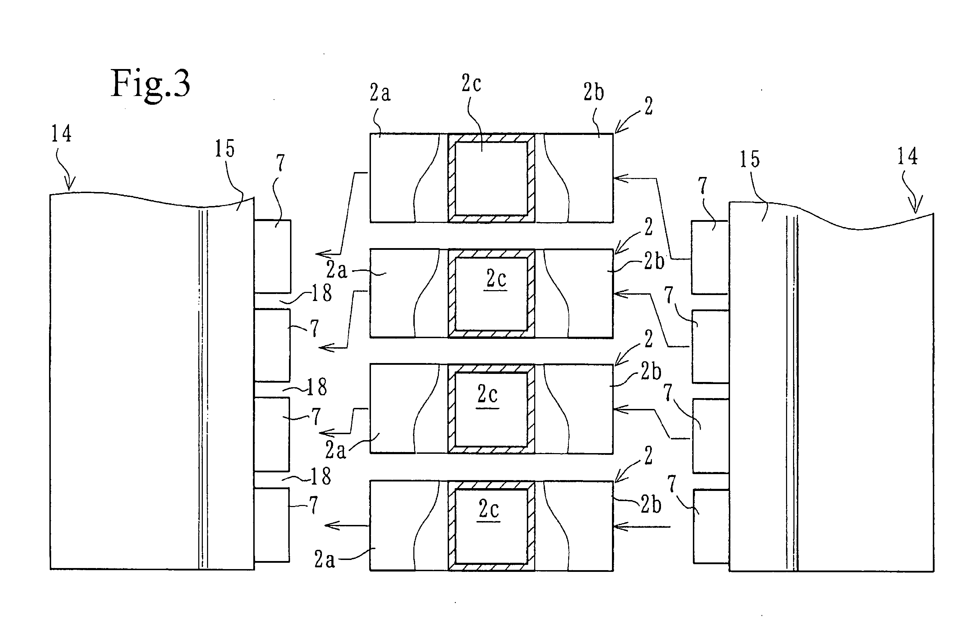

FIG. 3 shows an assembling state at the time of sub-assembling. The arm portion 2 is a square pipe made of the same kind of material as the bracket material 14 and is formed by regular-size cutting an extrusion molded arm material to the proper length previously. Into an end 2a of the arm portion 2 the engaging projection is fitted. The engaging projection 7 is formed such as to be tightly fitted into a square hole 2c of the arm portion 2. When sub-assembling the arm portion 2 with the bracket material 14, one end 2a in the longitudinal direction of the arm portion 2 comes into contact with a mounting wall 15a (see FIG. 2) on an end of the mounting projection 15. At the same time, the engaging projection 7 is fitted into the square hole 2c. The arm portion 2 is arranged in such a state that the extrusion direction of the arm portion 2 crosses at right angle the extrusion direction of the bracket material 14.

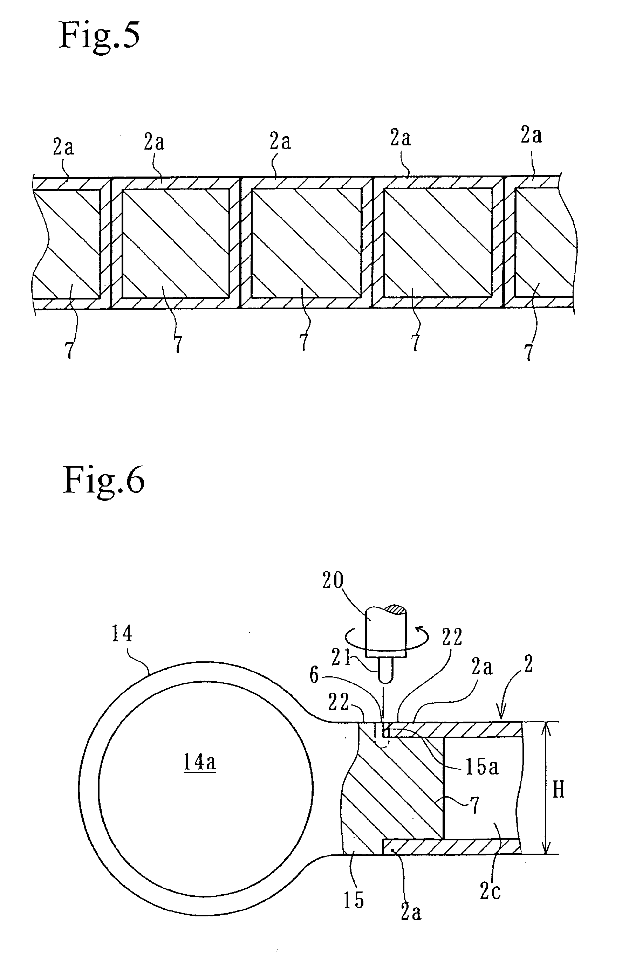

At this time, since the width (c) of each of the slits 18 is twice as large as the thickness (t) of each of the vertical wall of the arm portion 2, the vertical walls of the neighboring arm portions 2 come into contact with each other and are tightly fitted into the slit 18. Therefore, a plurality of the arm portions 2 can be arranged without clearance in a horizontal row in the extrusion direction of the bracket material 14. Moreover, since each of the slits 18 functions as a clearance for the end 2a of the arm portion 2 when the end 2a is fitted onto the mounting projection 15, the end 2a of the arm potion 2 can be butted against the mounting wall 15a of the mounting projection 15 (see FIG. 6).

Further, since the height H of the arm portion 2 is identical with the vertical width H of the mounting projection 15 (see FIG. 6), when the end 2a is butted against the mounting wall 15a, surfaces including the butted portion in the vicinity of the butted portion can form a flush tool traveling surface. Herein, the other end 2b of the arm portion 2 is engaged with the engaging projection 7 formed on other bracket material 14 so as to be sub-assembled in the similar way as on the side of the end 2a.

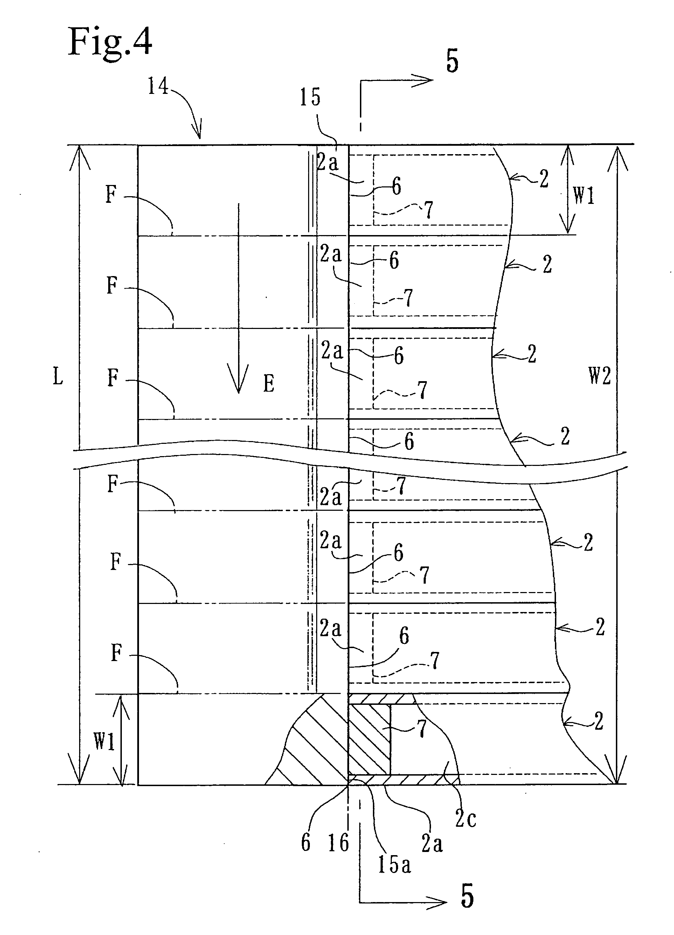

FIG. 4 is a top plan view showing the arrangement in a horizontal row of the arm portions 2 in the sub-assembled state. A plurality of the arm portions 2 are arranged in a horizontal row without clearance in the extrusion direction of the bracket material 14. Given that the length of the bracket material is L and the width of the arm portion 2 is W1, the width W2 of the entire arrangement in the case of arranging N pieces of the arm portion 2 in a horizontal row is W1 x N, which is set to be identical with the length L of the bracket material 14. When the end 2a of each of the arm portions 2 is butted against the mounting wall 15a of the mounting projection 15, the butted portions 6 between each of the arm portions 2 and each of the mounting projections 15 extend continuously in the shape of a straight line which overlaps a joining line 16 of an imaginary straight line. The friction stir welding is carried out along the joining line 16.

FIG. 5 shows the engaged states between the engaging projections 7 and the ends of the arm portions 2 in a cross-section taken along line 5-5 of FIG. 4. As shown in this drawing, the neighboring arm portions 2 are arranged continuously without clearance in a horizontal row and upper and lower surfaces of the arm portions are made flush.

FIG. 6 is a view showing a state of the friction stir welding. A probe 21 of a high speed rotation tool 20 is pressed on the butted portion 6 thereby to friction stir weld the materials on both sides of the butted portion 6 so as to be integrated.

Then, since each surface of the mounting projection 15 and the end portions 2a on both sides of the butt portions 6 forms a tool traveling surface 22 and is flush without height difference, the friction stir welding with high reliability by the rotation tool 30 can be carried out. Moreover, since the butted portions 6 are formed continuously across the entire width of the arm portions 2 in a horizontal row, the entire arm potions 2 can be joined to and integrated with the mounting projection 15 in one process step by letting the rotation tool 20 travel along the joining line 16. Furthermore, since the engaging projection 7 is press-fitted into the square hole 2c of the end 2c, even if the rotation tool 30 is pressed on the end 2a, the engaging projection 7 supports the end 2a from the inside thereof so that the end 2a can be prevented from denting downward. Therefore, the stable friction stir welding by the rotation tool 30 can be carried out with high reliability. Herein, in the case of friction stir welding the back side, the whole of the bracket material 14 and the arm portions 2 sub-assembled as mentioned hereinabove is tuned over so that the back side is friction stir welded in one continuous process step in the similar way to the front side.

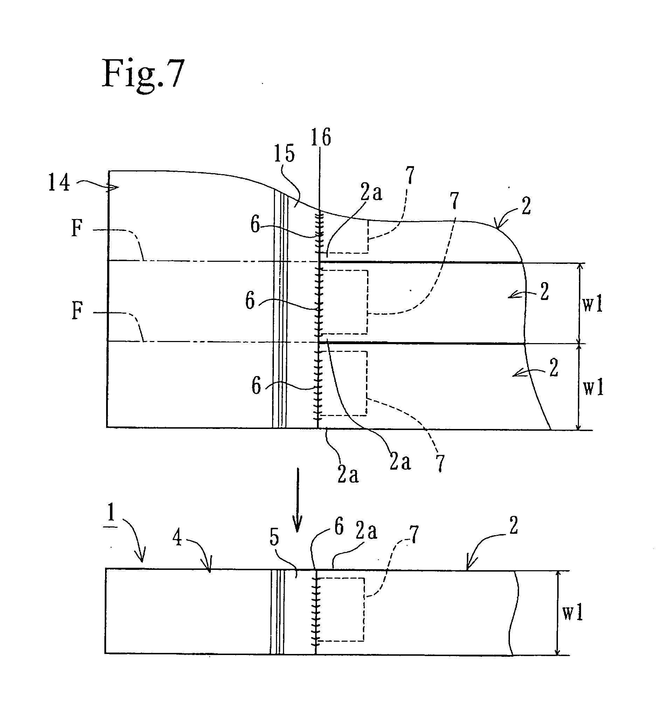

FIG. 7 is a top plan view for explaining a friction stir welding process and cutting process. After joining integrally N pieces of the arm portions 2 to a single bracket material 14, the bracket material 14 is cut to the width W1 in the direction crossing at a right angle the direction E of extrusion thereof along the cutting lines F marked with a phantom line, so that each of the link rods is made separately. At this time, since the cutting length is relatively short, it is possible to cut easily and speedily the bracket material 14. This easy and speedy cutting operation and the friction stir welding in a single process step combine to manufacture the link rod with high production efficiency.

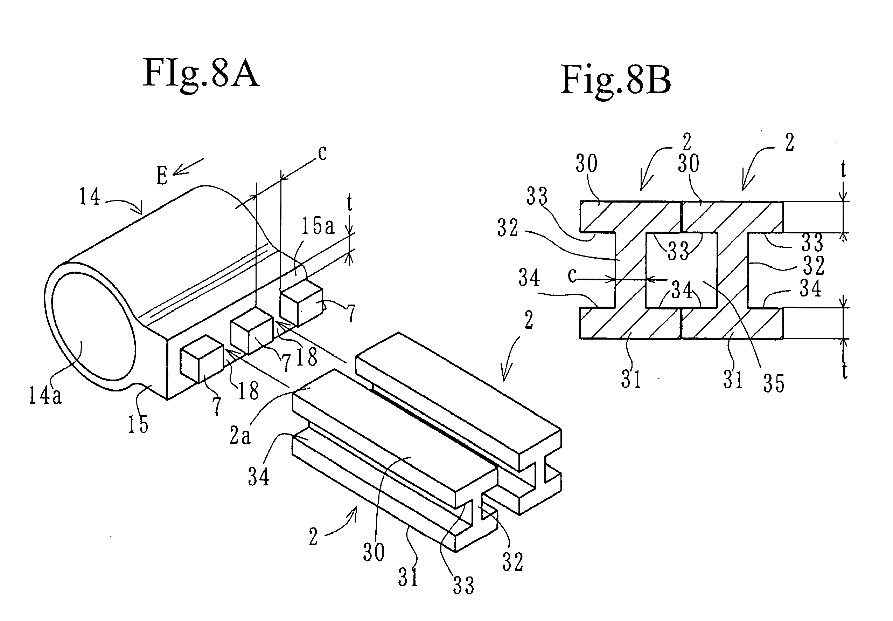

FIG. 8 shows the second embodiment wherein an arm portion 2 is not in the shape of pipe. Since the modification is made only with respect to the arm portion 2, like reference characters in the former embodiment are used commonly to like or corresponding parts and portions. FIG. 8-A shows an assembling operation of the arm portion 2. An end 2a of the arm portion 2 is butted against a mounting wall 15a of a mounting projection 15 in a bracket material 14 as shown in FIG. 2-B. Two or more arm portions 2 are arranged in a horizontal row with respect to the bracket material 14. The arm portion 2 is a longitudinally extending member having a substantially I-shaped cross section, formed by extrusion molding and regular-size cutting the arm material, and has a first wall 30, a second wall 31 and a third wall 32. The third wall 32 integrally connects in the vertical direction between the first wall 30 and the second wall31 which extend in a pair in parallel with each other on upper and lower horizontal planes. The thickness (c) of the third wall 32 is substantially the same as the width (c) of a slit 18.

FIG. 8-B is a cross sectional view of neighboring two arm portions 2 in the direction crossing at a right angle the longitudinal direction of the arm portion 2. The thickness (t) of each of the first wall 30 and the second wall 31 is substantially identical with the space (t) between an engaging projection 7 and each of outer ends of upper and lower mounting walls 15a of a mounting projection 15 (see FIG. 8-A). The first wall 30 and the second wall 31 each have protrusions 33, 34 each of which extend laterally from the third wall 32 in the direction crossing at a right angle the longitudinal direction of the arm portion 2. When lateral ends of the extrusions 33, 34 in the neighboring arm portions 2 come in contact with each other, a square space 35 is formed by these protrusions 33, 34 and the neighboring left and right third walls 32. This space 35 has the size and the configuration to be tightly engaged with the engaging projection 7.

Then, as shown in FIG. 8-A, when the arm portions are arranged in a horizontal row, the engaging projection 7 is fitted into the space 35 formed between the neighboring arm portions 2 while fitting the third wall 32 into a slit 18. At this time, since the thickness (t) of each of the first wall 30 and the second wall 31 on the end 2a of the arm portion 2 is identical with the space (t) formed between each of the outer ends of the upper and lower mounting walls 15a of the mounting projections 15 and upper and lower surfaces of the engaging projection 7, surfaces in the vicinity of butted portions between the arm portions and the bracket material 14 forms a flush tool traveling surface.

The tool traveling surface is formed in the shape of a straight line with respect to each of arm portions 2, and at the same time as shown in FIG. 4, etc., the butted portions 6 extend continuously in a straight line. Therefore, when the tool travels on the tool traveling surface along the butted portions 6, the friction stir welding is carried out in one continuous process step. Then, since the first upper wall 30 and the second lower wall 31 which are being pressed by the tool each are supported by the engaging projection 7 to be prevented from deformation, it can meet the actually required conditions for friction stir welding, together with the flush tool traveling surface as mentioned above. In the case where the extrusion material of substantially I-shaped cross section of a relatively moderate price is employed, the efficient manufacture using the friction stir welding also may be carried out.

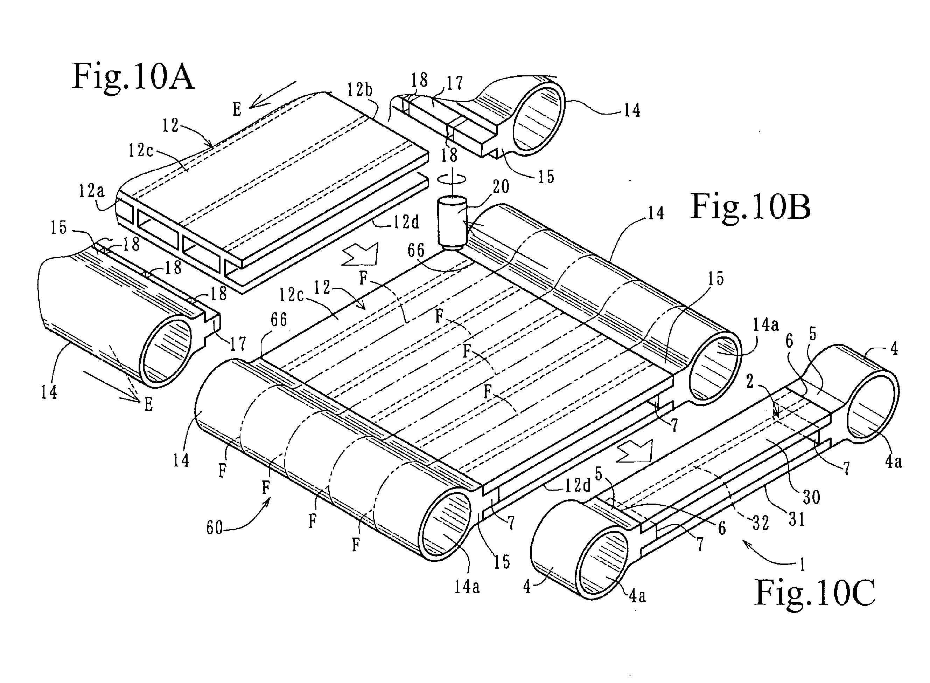

FIGs. 10-13 show a third embodiment. FIG. 10 is a view for schematically explaining an entire method of manufacturing a link rod 1. In the drawing, a view A shows a process of butting each end of left and right mounting projections 15 provided on left and right bracket materials 14 against both ends 12a, 12b of an arm material 12, after extrusion molding the left and the right bracket materials 14 and the arm material 12. The bracket material 14 is substantially the same as the one shown in each of the above embodiments. 14a denotes an integrally formed bush mounting hole. A view B shows a process of friction stir welding. In the drawing, the left and the right bracket materials 14 and the arm material 12 are sub-assembled to form a sub-assembled body 60 in such a manner that the mounting projections 15 of the left and the right bracket materials 14 are butted against both ends 12a, 12b of the arm material 12 while having engaging projections7 fitted into both ends 12a, 12b of the arm material 12. The friction stir welding is carried out by letting a rotation tool 30 travel along a butt line 66 between the arm material 12 and the mounting projections 15 so that the arm material 12 and the mounting projections 15 are joined and integrated together.

Thereafter, by cutting the sub-assembled body 60 into the width of the product along cutting lines F, a link rod 1 as shown in a view C is obtained. The view C shows in perspective the link rod 1 which is separated and finished. 4a denotes a bush mounting hole. This link rod 1 is the same as the one shown in FIG. 8. Therefore, the reference characters in the second embodiment are commonly used with respect to the link rod 1 as a product shown in the view C.

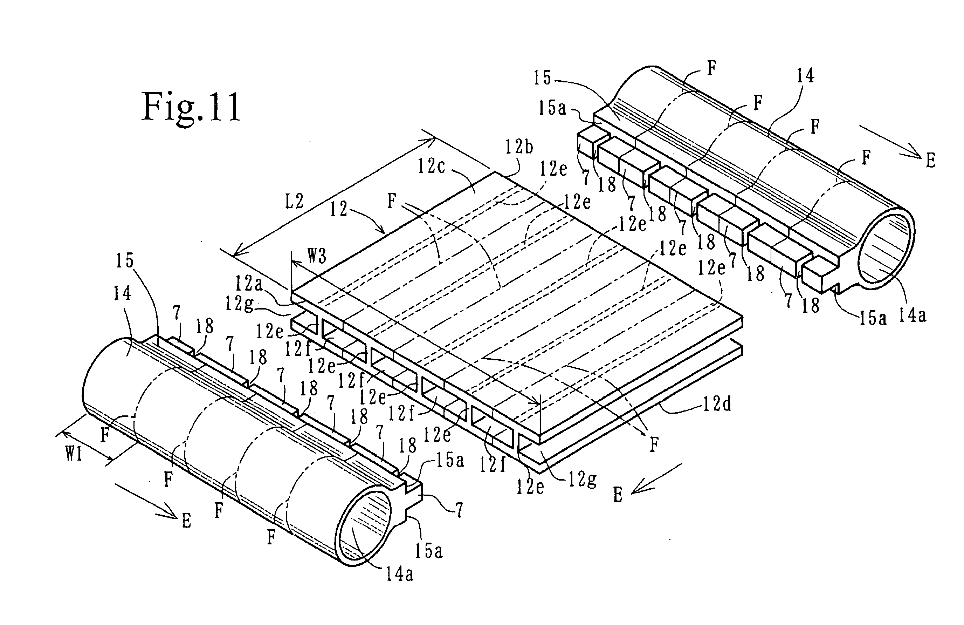

FIG. 11 is a view showing details of the process of FIG. 10-A. The arm material 12 is obtained by extrusion molding light metal such as aluminum ally, etc. or resin in the direction of the arrow E such that the width of the extrusion corresponds to the one obtained by arranging in a horizontal row a plurality of arm portions 2 (in this example, 5 pieces) as shown in FIG. 10 and by regular-size cutting the extrusion to the length L2 of the arm portion 2. The width W3 of the extrusion is W1 x 5 (pieces) wherein W1 is the width of a product, and it corresponds to W2 of FIG. 4.

The arm material 12 has a first wall 12c, a second wall 12d and third walls 12e of substantially rib shape which cross at right angles the first and second walls 12c, 12d. The first and second walls 12c, 12d extend in parallel with each other while having the thirds wall 12e arranged between them. The third walls 12e extend along the entire length in the direction of extrusion and are formed with five pieces at regular intervals in the width direction of extrusion. These three walls are formed integral with each other. Between the neighboring third walls 12e there are formed hollow portions 12f which pass through the arm material 12 in the direction of extrusion. On each end in the width direction of extrusion there is provided a groove 12g which is opened laterally.

The materials 14 for bracket, substantially the same as the one mentioned hereinbefore, are obtained by being extrusion molded and then by being regular-size cut to the length W1 x 5, wherein W1 is the width of a product. This length is equal to L of FIG. 4 and substantially identical to the width W3 of extrusion of the arm material 12. At the time of extrusion molding, there is integrally formed on a mounting projection 15 a horizontal projection 17 (see FIG. 10-A) which projects from the mounting projection 15 and extends continuously in the direction of extrusion. On the horizontal projection 17 there are formed slits 18 at predetermined intervals in the extrusion direction by cutting or the like after the regular-size cutting of the bracket material 14 following the extrusion molding, so as to form engaging projections 7. The bracket material 14 after forming the slits 18 is identical with the one shown in FIG. 8-A, and the slits 18 each have the width allowing the third wall 12e to be fitted. The engaging projections 7 are separated from the neighboring ones by the slits 18 and each formed to be tightly fitted into the hollow portions 12f and the end grooves 12g.

The arm material 12 and the bracket materials 14 are butted each other such that the extrusion direction E of the arm material 12 crosses at a right angle the extrusion direction E of the bracket materials 14. Then, The third walls 12e of the arm material 12 are fitted into the slits 18 of the bracket material 14. At the same time the engaging projections 7 of the bracket material 14 are engaged with the hollow portions 12f of the end grooves 12g of the arm material 12 . At this time. the mounting walls 15a of the mounting projections 15 butt against end surfaces 12a, 12b on both ends of the arm material 12, as in the first embodiment.

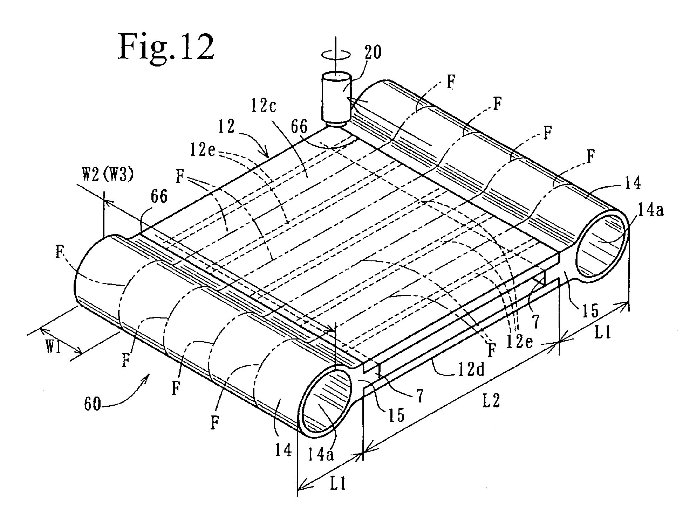

FIG. 12 is a view showing in enlarged scale the process B shown in FIG. 10. Since this sub-assembled body 60 has the friction stir welding line (the butt line) 66 which is formed in the shape of continuous straight line, the friction stir welding can be smoothly carried out on this line in one continuous process step. The process of friction stir welding is performed in a similar manner as in FIG. 6. Thereafter, the entire length of the sub-assembled body 60 is cut in the extrusion direction of the arm material 12 along the cutting lines F passing the intermediate point of the neighboring third walls 12e, 12e with a proper cutter such as a band saw or the like so as to separate the neighboring link rods 1 (see FIG. 10) from each other. The cutting length at this time is L1 (the length of the bracket 4) x 2 + L2 (the length of the arm portion 2).

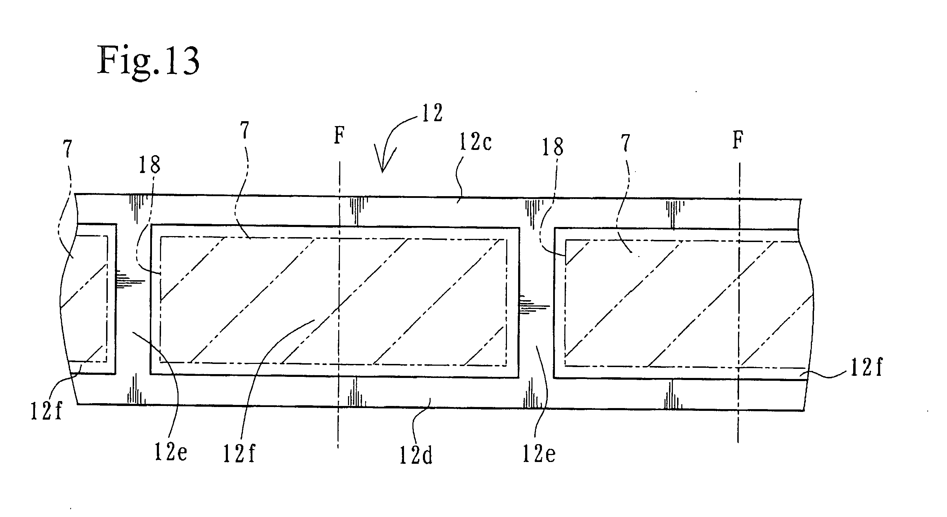

FIG. 13 is a view showing the end of the arm material 12 viewed from the direction of extrusion. Each of the engaging projections 7 is engaged between the first wall 12c and the second wall 12d. Each of the hollow portions 12f has a horizontally extending rectangular shape in a state shown in the drawing. F is the cutting line. After the process step of friction stir welding, the intermediate point between the neighboring third walls 12e is cut along the cutting line F.

As explained hereinabove, it is possible to easily and efficiently manufacture the bracket materials 14 and the arm material 12 for a plurality of link rods by extrusion molding. Also, since it is possible to carry out manufacture using only these three members, the treatment and the positioning can be facilitated. Moreover, the entire surfaces in the vicinity of the butted portions 6 along the friction stir welding line 66 are made flush, so that it is easy to form the continuous flat tool traveling plane so as to easily carry the friction stir welding operation. Further, in the process step of friction stir welding the same effects as in each of the preceding embodiments can be obtained.

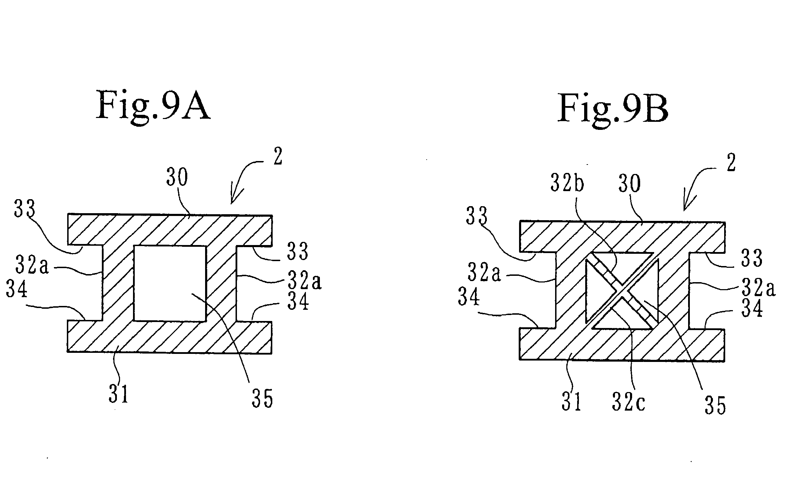

While the present invention has been described in its preferred embodiments, it is to be understood that the invention is not limited to each of the embodiments but may be otherwise variously modified and changed within the true scope and spirit of the invention. For example, since for the arm portion it is required to provide a first wall 30, a second wall 31 and a third wall 32 and to form a space between the first wall 30 and the second wall 31, the arm portion is not limited to a pipe member but may be formed by a member of I-shaped cross section, H-shaped cross section, etc. An arm member provided with two or more third walls 32 and the protrusions as mentioned hereinbefore may be employed. Such arm members may be easily and cheaply formed by extrusion molding. Therefore, it is not limited to the one of substantially I-shaped cross section as mentioned hereinbefore but it is possible to employ the ones as shown in FIG. 9-A and B. FIG. 9-A and B are schematic cross-sectional views of the arm portions 2. A is an example of the arm portion 2 having two or more third walls 32a, 32a. B is an example of the arm portion 2 having diagonally crossing walls 32b, 23c in addition to the third walls 32a, 32a. These are shown simply as examples, and if possible to be formed by extrusion molding, ones of various shapes of cross-section may be employed. Further, the link rod can be applied to various devices for vehicle such as a suspension, an engine mount, etc.

In a method of manufacturing link rod which integrally joins bushes to each end of pipe-shaped arm portion, an extrusion molded bracket material (14) is formed to have the length allowing N pieces of the arm portions to be arranged in a horizontal row. Engaging projections (7) provided on the bracket material (14) are engaged with ends of the arm portions (2). Then, the ends of the arm portions (2) are butted against mounting walls (15a) provided on a mounting projection (15) of the bracket material 14. N pieces of the arm portions (2) are arranged without clearance in a horizontal row with respect to the bracket material (14) to form butted portions in the shape of a continuous straight line. The friction stir welding is carried out along the butted portions. Then, the bracket material (14) is cut into the width of the bracket (4). The engaging projections (7) are formed by forming slits (18) at given intervals on a horizontal projection (17) extrusion molded integrally with the bracket material (14).

### DESCRIPTION OF REFERENCE CHARACTERS

1: Link rod, 2: Arm portion, 3: Bush, 4: Bracket, 5: Mounting projection, 6: Butted portion, 7: Engaging projection, 14: Bracket material, 15: Mounting projection, 17: Horizontal projection, 18: Slit

## Claims

1. A method of manufacturing a link rod which comprises an arm portion of longitudinal shape having a pair of spaced first and second walls parallel extending to each other and a third wall connecting between said first and second walls, and a bush mounting bracket being joined to an end in the longitudinal direction of said arm portion, wherein a bracket material is extrusion molded and cut in the longitudinal direction thereof to the length capable of forming a plurality of bush mounting brackets, a plurality of arm portions are arranged in a horizontal row with respect to said bracket material in the direction of extrusion of said bracket material, each end of said arm portions are butted against said bracket material such that such butted portions extend in the form of continuous straight line, each of said arm portions are friction stir welded to said bracket material along said butted portions in one process step, and then said bracket material is cut to the width of a bracket, comprises the steps of forming integrally on said bracket material a horizontal projection which projects in the direction crossing at a right angle the extrusion direction of said bracket material and extends continuously in the extrusion direction thereof, making vertical slits, each of which has the width allowing end of the third wall to be engaged, on said horizontal projection at predetermined intervals in the extrusion direction of said bracket material to form a plurality of separate engaging projections, having the ends of said third walls engaged with each of said slits and, at the same time, having said engaging projections fitted into spaces provided between said first wall and said second wall on the side of the ends of said arm portions, having each end of said first and second walls butted against said bracket material to be made flush with each other to form a continuous plane tool traveling surface across said arm portions arranged in a horizontal row.

2. A link rod manufacturing method according to claim 1, wherein said arm portion is formed in the shape of a square pipe, a hollow portion opened to an end of the square pipe forms the space provided between said first and second walls, and said engaging projection is engaged with said hollow portion.

3. A link manufacturing method according to claim 1, wherein said first and second walls are provided each with protrusions protruding from said third wall in a horizontal direction crossing at right angle the longitudinal direction of said arm portion, and the space into which said engaging projection is fitted is formed between said protrusions of said neighboring arm portions.

4. A method of manufacturing a link rod which comprises a longitudinally extending arm portion having a pair of spaced first and second walls formed in parallel in a cross section crossing at a right angle the longitudinal direction thereof and a third wall connecting between said first and second walls, and a bush mounting bracket having a bush mounting hole and being integrally formed with an engaging projection to be engaged between said first and second walls on an longitudinal end of said arm portion, wherein said bush mounting bracket is friction stir welded to and formed integral with the longitudinal end of said arm portion, comprises the steps of forming a bracket material by extrusion molding such that an extrusion has in cross section a configuration of a front view of said bush mounting bracket when viewed from an axial direction of said bush mounting hole and is formed integral with a horizontal projection which projects in the direction crossing at a right angle the direction of extrusion and which extends continuously in the direction of extrusion and then by cutting the extrusion in the longitudinal direction thereof to such a predetermined length that a plurality of said bush mounting brackets are arranged in a horizontal row, forming an arm material by extrusion molding such that a cross section of an extrusion corresponds to a cross section, crossing at a right angle the longitudinal direction of each of said arm portions, in such a state that a plurality of said arm portions are arranged in a horizontal row, and such that the width of the extrusion corresponds to the cutting length of said bracket material and then by cutting the extrusion in the longitudinal direction thereof to a predetermined length of said arm portion, making vertical slits, each of which has the width allowing an end of said third wall to be engaged, on said horizontal projection at predetermined intervals in the extrusion direction of said bracket material to form a plurality of separate engaging projections, arranging said bracket material and said arm material in such a state that the extrusion directions of these materials cross at right angles each other so as to have the ends of said third walls fitted into the slits and at the same time to have said engaging projections fitted into spaces provided between said first wall and said second wall on the side of the ends of said arm portions, having each end of said first and second walls butted against said bracket material to be made flush with each other to form a continuous plane tool traveling surface across said arm portions arranged in a horizontal row and to form butted portions in the shape of continuous straight line, carrying out friction stir welding by letting a rotation tool travel on the tool traveling surface along said butted portions so as to integrate said bracket material with said arm material, and then cutting the joined bracket material and arm material into the width of a product.
